# EUROPEAN PATENT APPLICATION

(11) **EP 2 908 284 A1**
(43) Date of publication of application: **19.08.2015**
(21) Application number: 13846748.5
(22) Date of filing: 16.08.2013
(51) Int. Cl.: G06Q 50/20

(54) **METHOD FOR PROVIDING LEARNING INFORMATION, SYSTEM FOR PROVIDING LEARNING METHOD AND LEARNING APPARATUS**

(30) Priority: 15.10.2012 KR 20120114105
(71) Applicant: Genius Factory Inc., Seoul 135-712 (KR)
(72) Inventor: LEE, Ju Hwan, Incheon 403-727 (KR)
(74) Representative: Plougmann & Vingtoft A/S
(86) International application number: PCT/KR2013/007408
(87) International publication number: WO 2014/061909

(57) **Abstract**

The present invention relates to the method and apparatus for providing learning information. The method providing learning information composed of a learning topic categorized by public school grade levels comprising steps of: (a)displaying a predetermined shape embodying the learning topics;(b)when receiving a user selection for the shape, displaying learning information belonging to the selected learning topic by dividing the learning information by grade levels; and (c) when one of the learning information divided by the grade levels is selected, providing learning content belonging to the selected learning information.

This method and apparatus for providing learning information allows users to holistically learn the English language and helping users to easily understand and remember concepts related to learning topics.

## Description

### Technical Field

The present invention relates to a method to provide learning contents, a system providing thereof, and a learning device.

### Background Art

Need for foreign language skills are grown in the era of the globalization. In particular, the English language is used as one of the global common language nowadays and thus, efforts for learning the English are continued.

In light of the information age, various forms of methods and apparatuses that provide learning information are being developed. No longer restricted to time or place due to the advances in communication technology, development of systems and apparatuses that provide learning information are increasing as it can be provided at anytime and anywhere.

In particular, when discussing methods for learning foreign languages, conventional methods for studying a foreign language undertake a dichotomized approach by studying grammar, vocabulary, and speaking as separate subjects. Although such an approach does fit in line with traditional theory of foreign language education, it has fundamental limitations in terms of efficiency and rapidity in mastering a language.

Meanwhile, the current English curriculum enforced by the public education system contributes to a high probability of a student's misplacement and discontinuity in the course of learning English. The matching of appropriate curriculums for individuals become deluded as students are taught curriculums preset for their grade levels and not their ability. Various proposals are being made to resolve the inefficiencies and problems caused by the public education system.

For current systems and apparatuses that provide learning contents, the focus of development is geared towards improvement in terms of hardware, with the use of communication technology. In particular, the main trend in developing methods and apparatuses for providing learning contents focuses on the use of computers, smartphones, tablet devices, and etc. through both wire/wireless Internet connection.

Traditional methods and apparatuses providing learning information have failed to significantly enhance effective learning, as their contents are either mere reproductions of the classroom environment or efforts to encourage learning through largely irrelevant recreational components.

As evident in Patent Laid-open Publication No. 10-2009-0115425 and 10-2008-0055368, traditional online foreign language education programs merely allow repetitions of the offline learning experience through computers and mobile devices. These systems are limited in their ability to improve a user's learning experience as they fail to provide a systematic and interactive learning environment. The realization of efficient and effective learning becomes difficult with the provision of such rudimentary contents.

Likewise, conventional methods and apparatuses providing learning information fail to provide information efficiently. Efficient transmittal of information is hindered as conventional systems fall short of providing either a systematic user interface environment, or learning contents organized systematically.

### Disclosure of Invention

### Technical Problem

It is the objective of the herein disclosed invention to solve the problems of prevailing systems through providing a personalized learning information method and device for providing the method. The method includes: displaying learning subjects in various ways, suggesting a learning direction tailored to individuals' learning purpose and level by allowing individuals to choose appropriate materials in accordance with his/her ability and goals, conveying knowledge from a large database of educational content, solving problems, simulation learning, and discussion learning contents. Through the above learning aids and by exchanging sufficient feedback with users, the system will speedily improve users' language skill.

Further, the invention has another objective that is to provide users with easy and quick access to a particular learning information through a search menu. Users can also easily digest grammar material at learning menu selection step in all of the chosen contents by using the grammar navigation menu for each content.

Unlike the traditional tree structure, which simply connects the upper-lower concepts, the above grammar navigation system provides the upper-lower concepts as an organically connected structure. The system is further distinctive in that it organically connects conceptions positioned on the same horizontal plane in addition to the upper and lower concepts.

It is another objective of the invention to provide a personalized online learning system that can quickly improve the user's language and memorization skills. The invention's data includes graphics, videos, texts, and voice recordings to collectively create a multimedia data set that allows understanding and memorizing language contents to be easier. The above-mentioned data set will be combined with the grammar navigation menu to create a more efficient learning system.

Furthermore, the invention aims to provide a bidirectional learning system that naturally induces its users to review and consequently master a subject matter they find difficult. Through a systematic analysis of a user's problem solving results, the system will use the information to not only adjust the difficulty level for the user, but also use the data, especially wrong answers data, to introduce likewise questions in further problem sets until the user chooses the correct answer.

### Solution to Problem

In order to achieve the above-mentioned objects, one embodiment of the present invention provides a method for providing learning information composed of learning topics by public school grade level curriculums via a mobile terminal. The method includes steps of:
(a) displaying a predetermined shape embodying the learning topics;
(b) when receiving a user selection for the shape, displaying learning information belonging to the selected learning topic by dividing the learning information by grade levels; and
(c) when one of the learning information divided by the grade levels is selected, providing learning content belonging to the selected learning. The learning information providing device in accordance with another embodiment of the present invention comprising:
   A mobile communication unit connected to a wireless communication network;
   A display unit receiving a touch input of a user and display learning information composed of learning topic per public education grade level; and
   A control unit controlling the display unit to display a predetermined shape embodying the learning topic, to display, when the user's selection on the predetermined shape is inputted, learning information belonging to the selected topic by dividing the learning information into grade levels, and performing, when one of the learning information divided by the grade levels is selected, a computation related to providing a learning content belonging to the selected learning topic.

The invention relates to the provision of methods and materials for learning through electronic processes and the devices that are capable of running such multimedia operations. In the case of learning English, appropriate education should be provided in a systematic and continuous manner for individuals. But as students are provided with uniformed education according to their grade levels, inefficiencies arise as students who require different levels of educational are deprived of appropriate contents. As a remedy to these inefficiencies, the invention provides educational material for different grade levels in different colors, and thus allows the easy facilitation for users of all grade levels to choose their desired contents for preparation, learning, and review. Furthermore, the "brightness" of the colors represents difficulty levels, allowing users to adjust the brightness to choose or exclude contents associated with different difficulty levels. The importance of each problem is indicated through the number of boundaries that surround the problem. With more number of boundaries representing greater importance, the standard of importance is based on how frequent similar problems appear on school tests, national exams, and other standardized tests. These visual characteristics collectively increase the effectiveness and ensure the continuity in learning by multi-dimensionally connecting the upper and lower concepts.

Although the present invention mainly deals with learning the English language, it should be noted that the present invention is not limited to this subject. In other words, the learning method and device in accordance with the embodiments of the present invention are applicable to subjects other than the English, like mathematics, social science, science and etc.

The invention has the following distinct characteristics:
The invention is associated with a mind-map method of learning which places the upper and lower concepts in a dimensional structure to increase the effectiveness of learning with the aid of visual effects. For example, in the case of English, learning English grammar through texts has proven to be inefficient. Through the invention however, grammar can be learned through a mind-map created by a structural connection between the importance levels and the upper and lower concepts. With the use of the invention, users can maximize efficiency in learning by simply tapping through the educational contents at their own desired pace. Furthermore, unlike conventional video lectures where lectures were unilateral and focused on topics at the discretion of the service provider, the invention is different in that lectures will not proceed without the active participation of the user. Users will also be able to quickly realize the priority levels of learning through a graphic interface modeled like the planetary orbit system; going further away from the inner orbit will represent lesser priority thereby allowing users to stay on track with higher priority learning contents.

The invention has made the process of choosing topics, learning, and reviewing easy for all grade level contents by displaying them in different colors. To illustrate through the case of English, the invention provides complete grammar contents, traditionally dispersed into curriculums of different grade levels, in one place through the grammar navigation learning method. Therefore, the users can use the grammar navigation system to choose any desired content in any grade level curriculum so that an organic and systematic learning is possible.

The invention provides tailored education for users through the navigation system. For example, in the case of grammar (English grammar in particular), the system allows users to choose the contents of how grammar is explained. This method provides users with a unique and tailored explanation and not simply the standard explanation.

While conventional methods of mind-map learning instigated users to first create their own contents by using predetermined contents and then study, the navigation system allows its users to choose from the large data set provided by the learning information provider and thus actively construct their own mind-map. For example, in the case of English grammar, the grammar navigation lists upper-lower concepts and horizontal concepts and subsequently makes connections among related concepts for the user. Users will not simply learn the aforementioned concepts mechanically, but learn by choosing a concept via following an organic connection between the concepts. Once a concept is chosen, questions related to the chosen concept and concepts chosen by the user thus far will be provided. For example, if a grammar rule requires three levels of concepts to be fully explained, the user will be able to actively choose explanations in each of the levels and choose again in lower subordinate concepts. If a grammar rule explanation requires three steps, and three different concepts can be chosen, the ultimate number of questions users will be provided with is 3 x 3 x 3 = 27. But, since the amount of contents provided for each step is different, the amount of practice questions provided in the end will vary. Such cases necessitate regular updates by the learning material provider.

The invention expresses difficulty levels through the adjustable "brightness" levels of different colors, allowing users to choose or exempt particular learning contents of different difficulties. This invention has applied the conventional mind-map concept and expanded its concepts. From a central subject, the mind-map aligns related subjects through various lines, expands /connects subjects radially, and portrays these connections in a picture much similar to the human thought process. The expression of conventional mind-maps in a flat plane was problematic as it was difficult for users to understand such large and complicated concepts. In other words, learning through the conventional mind-map usually took place through the creator of the mind-map, while the invention's navigation learning information providing system provides contents in accordance to the level of the users. The invention increases the efficiency of learning for learners as it applies a common standard in dividing the lower branches of each mind-map. Further, the invention provides learners with their desired difficulty levels through the different brightness in different colors. Users can take charge of their own learning by realizing their own learning priorities and weaknesses through 'navigation'.

The invention expresses the frequency in appearing in school tests, national tests, and standardized test by the number of boundaries thereby signaling its relative importance. All learning necessitates testing. As testing is an important procedure in proving an individual's capability, the invention also provides an efficient means in preparing for exams. The number of boundaries drawn around each element of the mind-map portrays which area of a subject appears on tests the most. Users can learn highlighted areas representing frequent appearance in school tests, national tests, and standardized tests by making the contents their own through repeated review.

In the final section of the mind-map, users are provided with examples, questions, and a voice lecture explaining these. For example, in the case of English grammar, simply knowing the concept and its name is not a complete learning. Learning provided by the invention instigates users to attain a thorough understanding of the topic through creative examples and compact questions together with visual aids.

The invention provides formal grammatical terms with a friendlier version of those terms. These simplified versions of important grammatical concepts make it possible for even those who are first studying grammar to easily follow through with the materials.

The following describes an application performing the English learning method using the grammar navigation.

First, when the application is turned on, the central concepts of the provided contents will appear. The user chooses his/her desired learning topic. According to the user's chosen topic, the user continuously chooses from upper topics to lower topics. The user then chooses the contents he/she wants according to his/her priorities, color, brightness, and the number of boundaries. As the user touches the displayed topics according to the steps described above, the user will come to lowest part of the subject. When the user touches the display representing this final part, the user will be provided with relative examples, and questions. Lastly, the user will be provided with voice lectures and other forms of learning contents as supplementary materials for the examples and questions. Users will also be able to refer back to the saved snapshots of examples and answers during any stage. A separate bulletin board is also available for individuals who have further questions about the learning material.

### Advantageous Effect of Invention

This new learning method makes three effects possible. First, this new method enables the so-called 'current flowing education'. Unlike the previous learning methods, this new method allows students to learn concepts of certain subjects, which further enables them to learn practical application of that concept. For example, existing learning method concentrates on grammatical concepts which limit the 'current flowing education.' For this reason, it cannot provide students with tailor-made education; its level of education is not suited for each individual. On the contrary, the invention's navigation learning system allows personalized, user specific and self-directed learning. With this method, a rapid increase in learning ability through organic learning of various concepts is possible.

Second, this navigation learning system provides "interactive education" to students. This educational method utilizes both output-oriented class and input-oriented class; while output oriented class focuses on example sentences and problem solving, input oriented class focuses on providing UI which enables the students to visually connect the learned concepts to problem solving.

Thus, this system allows well-balanced growth of students' abilities - input abilities such as reading and listening as well as output abilities such as writing and speaking.

Third, this content enables students to prioritize their educational steps. By perceiving "where I should start, what I am studying, and what I am going to learn", students can self analyze their accomplishments and meticulously plan out their future study.

### Brief Description of Drawings

Figure 1a and 1b are diagrams that show the structural representation of the present invention's contents.
Figure2 represents how the English learning information subjects will be displayed in the present invention.
Figure3 represents an overall picture of the structural connection of the provided contents in the present invention.
Figure4 represents the content provision level of the present invention.
Figure5a through 5g represents the method of providing contents through devices with VOD capabilities (mobile phones or notebook computers with touch capabilities and etc.) in the present invention.
Figure6 is a flowchart representing the information process of the second embodiment.
Figure7 is a block chart representing the systems and devices of the second embodiment.

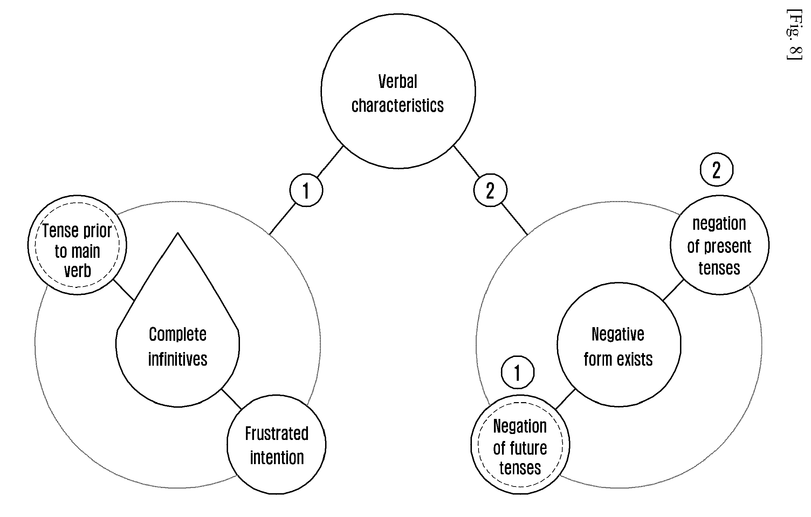

Figure8 represents how the subjects of English learning information contents will be displayed in the present invention.

### Mode for the Invention

The purpose, characteristics and advantages mentioned above will be described in a detailed manner referring to the attached drawings, so order that one who has general knowledge in the particular technology domain, which includes the present invention, will be able to easily carry out this technological idea. On the issue of explanation about the present invention, any detailed explanations about prior technology related to the present invention may cloud essential points are omitted. Remaining parts will meticulously explain the correct implementation of the invention by referring to the attached drawings. Referential marks, which are identical on the drawings, are used to point out identical or alike elements.

The first embodiment example of the present invention is about the method in which the organically connected English learning information is provided, and the system that provides this information.

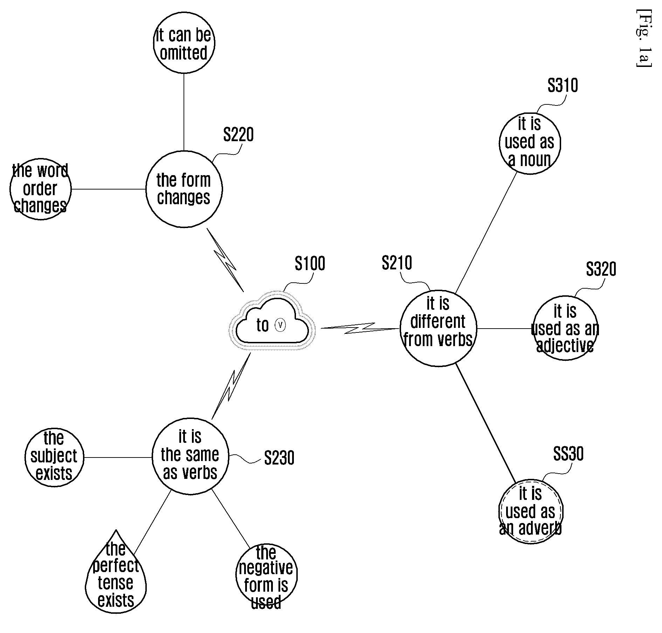

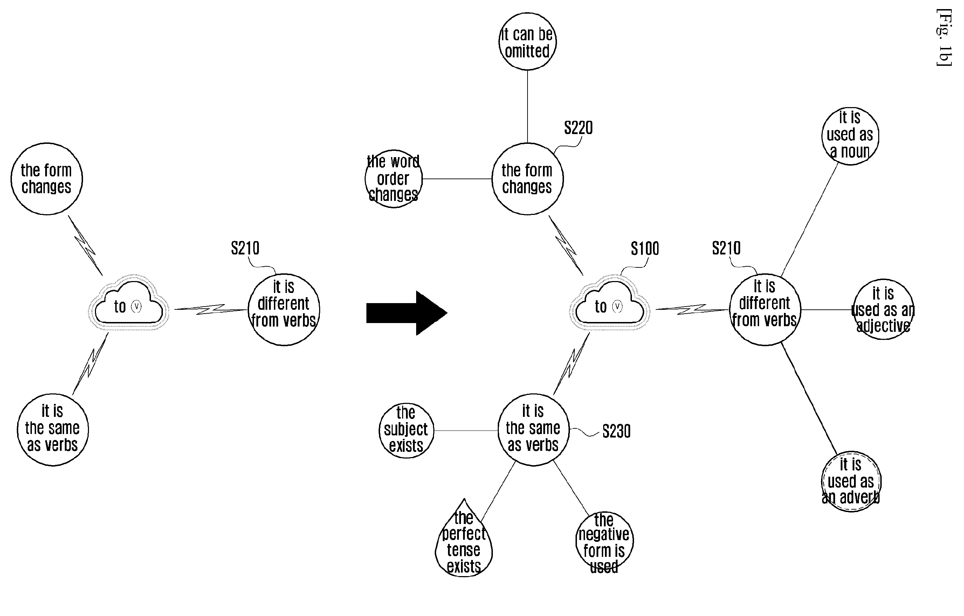

Figure 1a and Figure 1b portray the structural organization of the contents of the present invention.

The English learning method using the grammar navigation of the present invention is characterized in that a learning topic is organically connected in order to provide from one topic to actual learning contents suited to the learner

The above mentioned grammar navigation is provided through devices with multimedia capabilities, namely, mobile devices.

To explain the grammar navigation in detail, the user is provided with a learning topic at S100, and the user chooses his/her desired contents from S210 to S230. If S210 is chosen, the user can choose another sub-topic between levels S310 and S330. After a likewise selection process, the user is finally provided with learning contents. The user does the abovementioned choosing process actively, and it is through this process will the user be provided with contents that meet his/her level. As a result, effective learning is possible due to the allocation of contents that have been tailored according to a grade and capability level to and for the user. But, this type of learning would be possible if the learning information appears friendly and easy to the user. This underscores the importance of visual elements in learning contents, as they are pivotal in attracting a user's attention.

The components of a grammatical rule's structure are provided at the abovementioned topic selection stage. Whether the user knows the particular grammar rule or not is assessed through the choices the user makes, thereby allowing the user to actively learn how he/she approaches grammatical rules. This form of education can be considered to be the more efficient method when compared to the traditional style of education where engagement only happened unilaterally through texts, VODs, and voices from content materials.

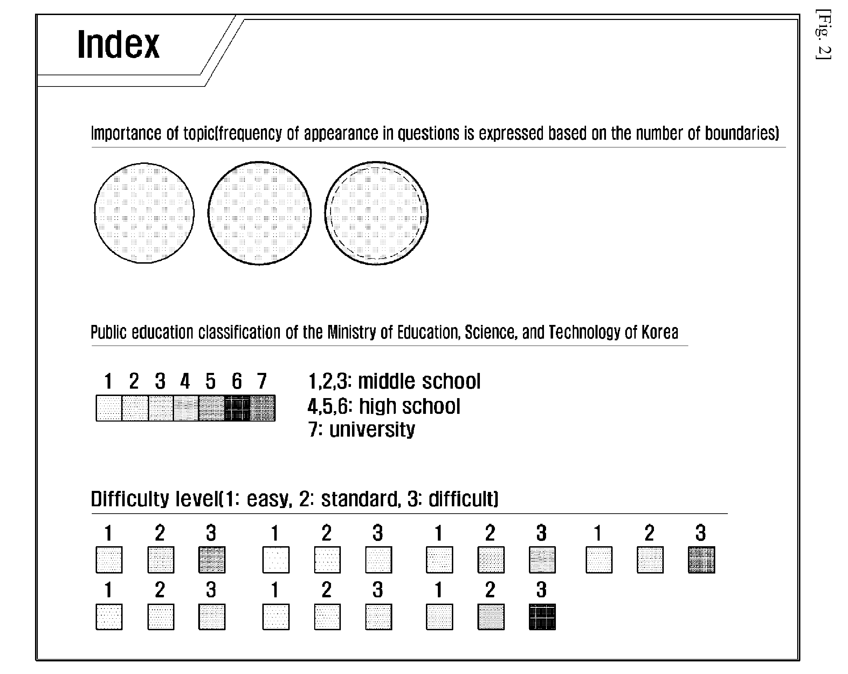

Figure 2 is an example plan to explain the method to show a topic of the English learning information content. The learning materials carried out by the learner differs according to difficulty levels, the frequency of its appearance in the questions, and the frequency of its usage. To differentiate these varying levels of importance, the implemented example of the invention will be shown through the boundaries that outline the topics.

The importance of a certain topic can be differentiated through the number of boundaries that outline a shape (circle or others); the shape representing a topic. As it can be seen in Figure 2, the different levels of importance can be expressed through shaded diagrams, the circumference of the solid line, and the circumference of the dotted line. A frequently appearing and important concept can be effectively expressed through the use of many boundaries. Through such marks, one can easily realize the importance of the learning topic and an effective learning will be made possible.

For the case of English learning, the range of levels and amounts of learning is vast. Therefore, it is effective to give learning materials according to the level of the learner. To implement the appropriate learning topic to each grade level, colors are implemented according to each topic of the different grade levels. For example, in the implemented example illustrated in Figure 2, grade levels are categorized into 7 levels according to the public education classification of the Ministry of Education, Science, and Technology of Korea.

For example, the Figure 2 depicts an elementary school level as yellow, first year middle school level as green, second year as blue, third year as violet, first year high school level and NEAT 3 as brown, second and third year high school level and NEAT 2 as red, and finally university level, NEAT 1, TOEIC and TEPS as clear. Therefore, in the case of green, the color alone signifies that the associated learning materials are appropriate for first year middle school students. Although only 7 colors are used in Figure 2, the learning information and methods according to the invention are not limited in correspondence with the number of colors. The number of used colors can be changed in accordance to the learning information.

The level of even the same learning topic should be different. Therefore, a method to differentiate such levels is necessary, and this can be done through the brightness of colors. It is preferable to differentiate a single topic into 3 different difficulty levels. For example, the green with low brightness can be easily recognized as the easy level of first year middle school.

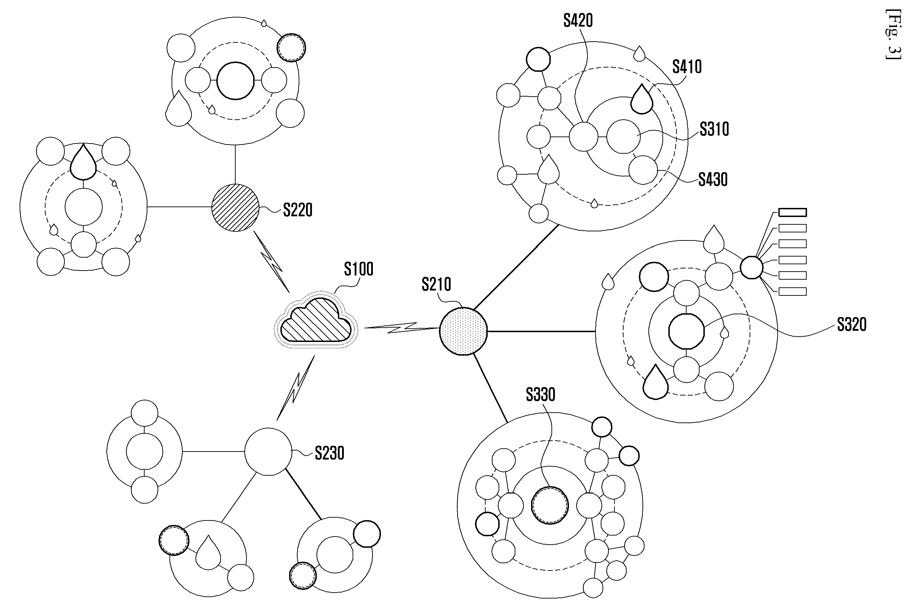

Figure 3 shows the whole learning content connection structure.

Although this type of learning information can be given altogether, it is more appropriate to be sequentially provided by the selection of the learner. This method of giving the learning content structure allows one to instantly see the importance, and notice the importance not through texts but through images. Such intuitive information relay is fast and convenient. In addition to images expressed through the devices, if different sound effects are also provided, the interest of the learner can be heightened.

Therefore, the interrelation of the each topic, relations of the levels, and the frequency of the questions in actual tests can be instantly recognized. The learner can actively choose the appropriate topic and level among various topics. Especially, the education will not only be a linear learning, but a three-dimensional learning connecting a variety of topics is possible.

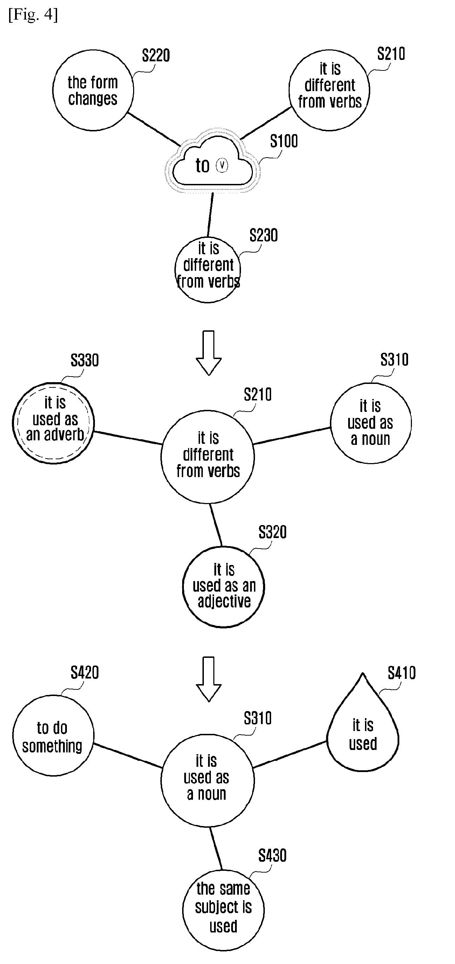

Figure 4 shows the steps in which the present invention will provide the learning contents.

In Figure 4, if the user chooses the topic "To Infinitive" (S100), the topic expands to "it is different from verbs" (S210), "the form changes" (S220), and "it is the same as the verb" (S230). If the user chooses S210 at this stage, second level sub-topics having S210 in the center will appear. Here the learner can choose between S310 to S330. If he/she chooses S310, a new topic, the third level sub-topic (S400) will expand, an extension of topics surrounding the upper topic of S310. S410 or S430, the lower level content of S310 will be shown, and the learner can choose the learning topic. Such step-by-step provision of learning contents can be confined further. In the implemented example, there are no more new learning topics below the S410.

While the structural concept of upper-topics and sub-topics has been emphasized to explain the topic choosing process, users may require other choices according to the varying importance and content of each topic. As such, it is also possible with the present invention to connect topics and concepts that can be compared on the same plane.

At the final level of the learning topic, the user is provided with learning contents. These contents can take the form of sentences, examples, questions, audio lectures, or VOD lectures. The contents are not limited to being any one of the above forms, but rather come in a combination of various forms. Aside from the contents provided after the final choosing level, for the upper-topics, contents are provided during the intermediary choosing process of sub-topics when necessitated by the user. When considering the varying importance and quantity of contents for the various topics, various ways of providing contents is important.

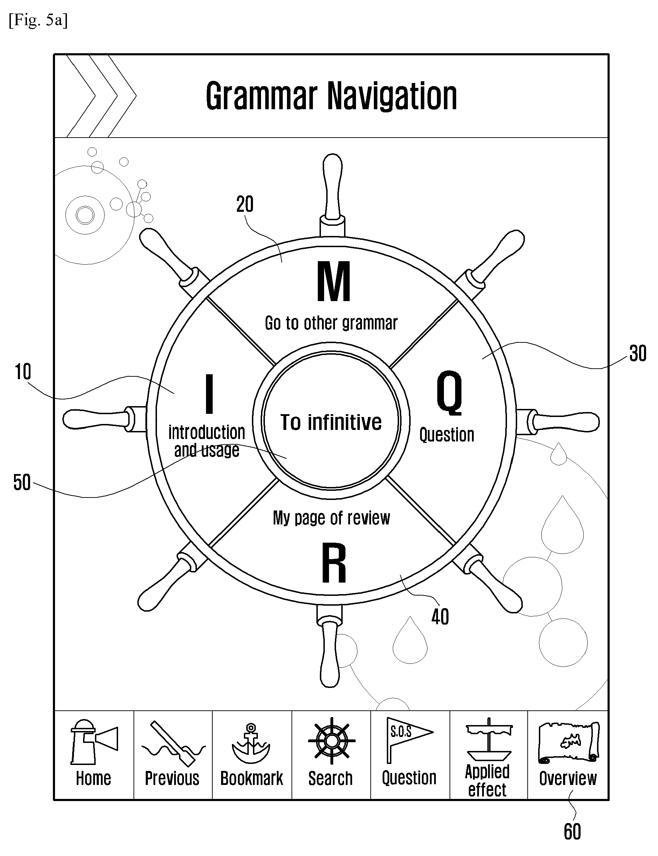

Figure 5a to 5e shows the stages in how learning contents are provided for multimedia devices (mobile devices or notebook computers with touch capabilities, and etc.). It explains how the grammar navigation actually functions on a device that has display capabilities.

Figure 5a shows the initial screen of the grammar navigation in a multimedia device. Users can check the overall structure of the learning contents through selecting all of the Figures (60). This type of structure is similar to the one represented in Figure 3.

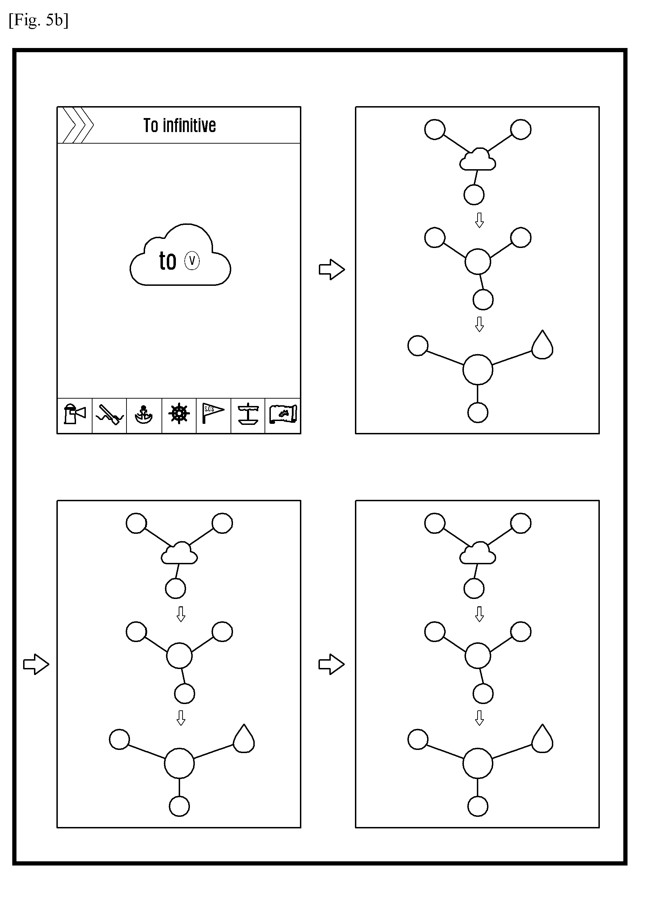

If a topic (between 10 to 50) is chosen, the image information displayed on the screen changes. If topic (50) is chosen, information like that of Figure 5b is displayed on the device.

Figure 5b shows the stages in which learning topics are displayed in multimedia devices. This kind of display is also similar to Figure 4. Although lines connecting the related shapes together in Figure 5b represent the connection between topics, connections can also be expressed through the positional relationship between the shapes.

Further, while only 2 learning topic stages are shown in Figure 5b, there may be more than 3 levels in different circumstances. When displaying more than 3 levels of learning topics, understanding relationships between topics becomes and easier and thus allows more efficient learning. When displaying more than 3 levels of topics, it is best to use several layers with those on the bottom shown faintly. In this case, the faintness will let users know that the faint topics are at the bottom level and allow those topics to be perceived with less importance.

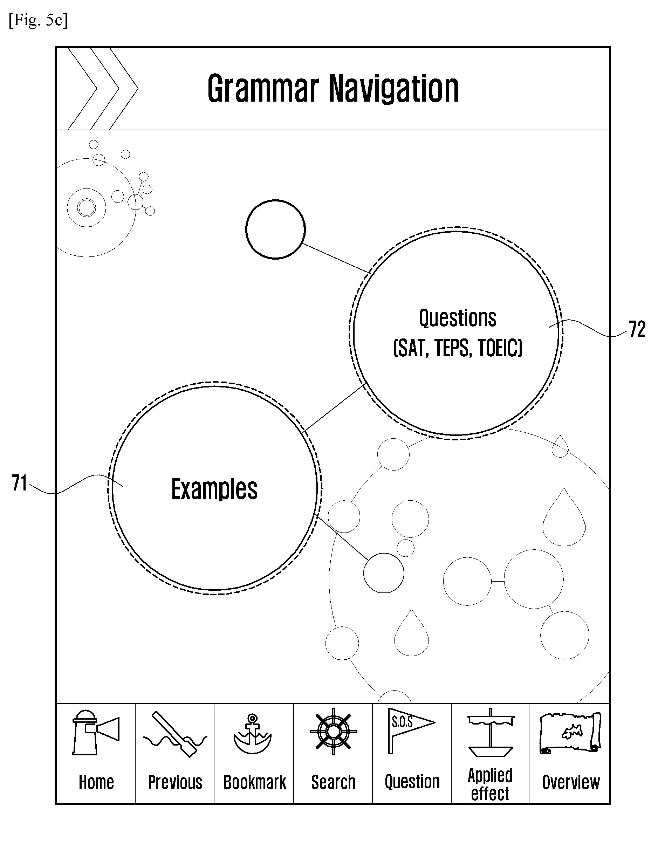

When the final topic is finally chosen, the process of selecting learning topics is finished and the process of choosing learning contents begins (Figure 5c). When the user chooses his/her desired contents, texts, voice, video, or a combination of those contents will be provided. Aside from the contents that are displayed after the final selection process, for upper level topics, contents may be provided at any time during the selection process.

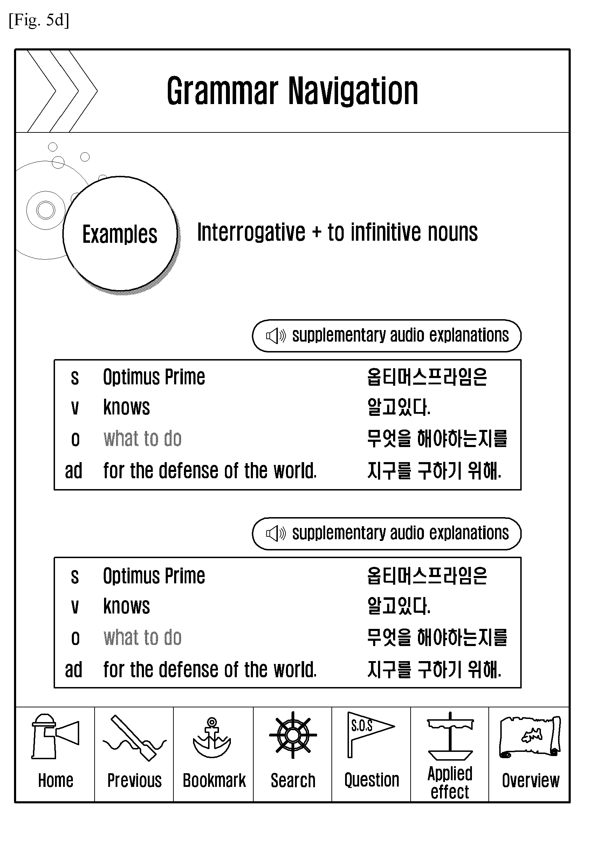

Moreover, when 71 or 72 in Figure 5c is chosen during the final selection stage, the interface displayed on the users device will appear to be like the illustrations of Figure 5d to 5g.

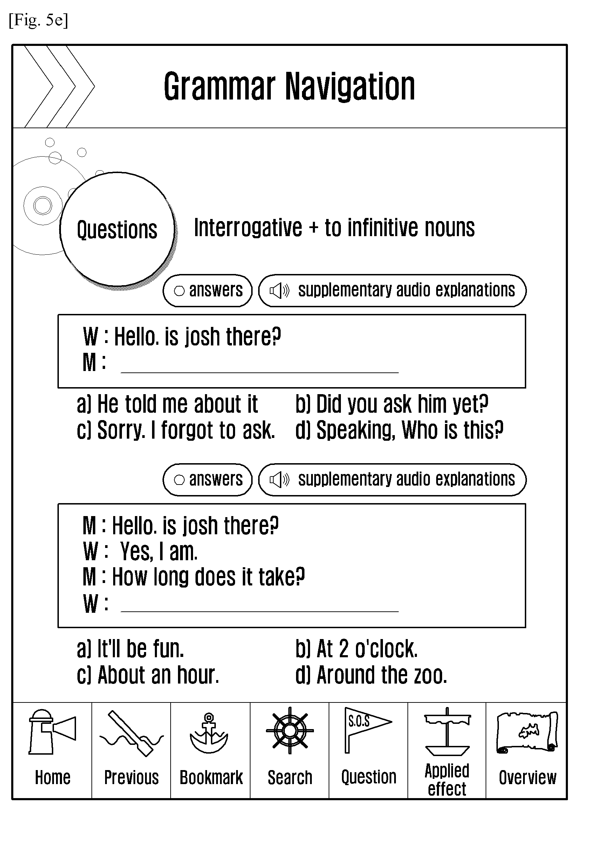

Figure 5d and 5e show a model of the interface screen for viewing examples and solving problems respectively. Figure 5d shows what will be displayed when examples related to topics of interrogatives + to infinitive nouns are chosen along with a button for supplementary audio explanations. Figure 5e is an example of what will be displayed when the user decides to check his/her answers for the topics of interrogatives + to infinitives. Alongside the answers, two buttons, one to check the answers and another for supplementary audio explanations will be displayed. The user will be provided with answers and explanations through touching the answers and audio buttons.

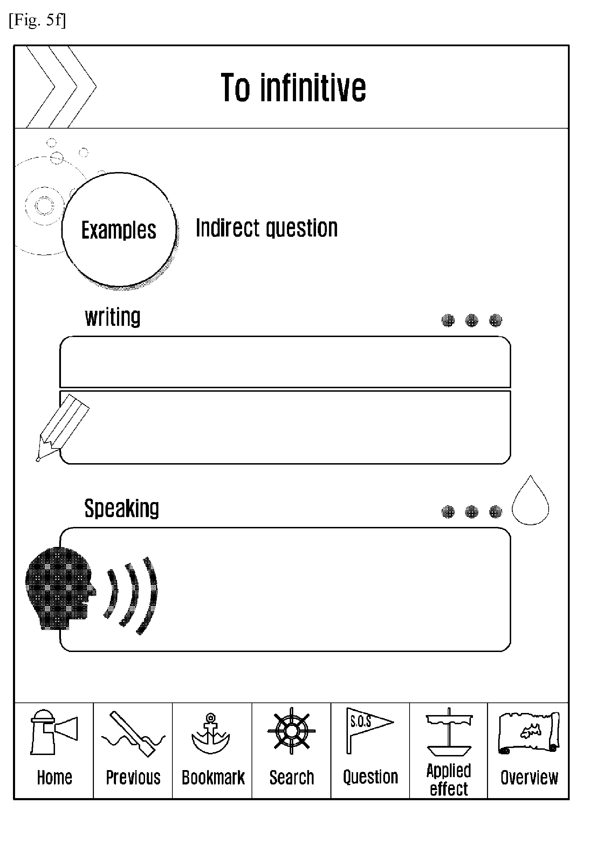

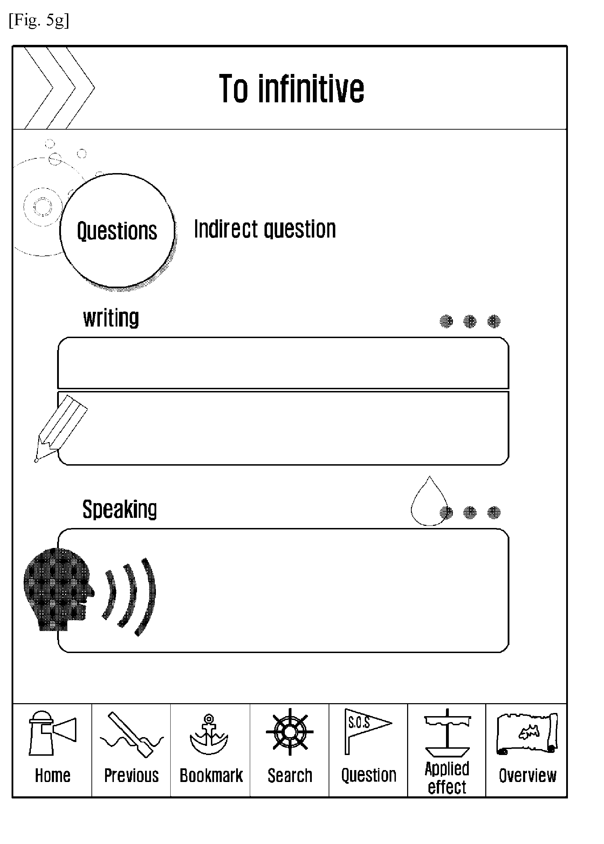

On the other hand, Figure 5f and 5g illustrate a user interface screen in accordance with another embodiment of examples and questions.

Figure 5f and 5g display examples and questions for the selected topic of to-infinitives. An area in which users can input his/her answers by a touch input means or key input means will also be displayed. The English learning information provision apparatus used by the present invention is configured to accurately assess whether the answers entered by a user in the above mentioned area is correct or not. Also, an additional feature of the apparatus determines whether the number of correctly assessed answers exceeds the pre-set number of desired correct answers. The English learning information provision apparatus of the present invention can also be programmed to only allow a user to move on to other topics when they attain the pre-set number of correct answers. The pre-set numbers can be configured freely by user, or be left to follow default settings. Likewise, the present invention encourages thorough learning and thus, increases the effectiveness of learning.

Further, as Figure 5f and 5g displays, another area where users can verbally enter their answers relating to the examples and questions can be displayed. Users can practice talking in English by reading examples or answering questions with their voice. The English learning information provision apparatus is capable of assessing voice input, received as voice data from the user, to check the accuracy of a user's pronunciation in contrast to default data in the apparatus' database. Similar to the abovementioned technology assessing user's writing input, the apparatus of the present invention can evaluate whether the number of correctly assessed voice input exceeds the pre-set number of desired correct answer. Like the assessment of writing input, users can configure the program to allow progression to other topics only when the number of correctly assessed voice input exceeds the pre-set numbers.

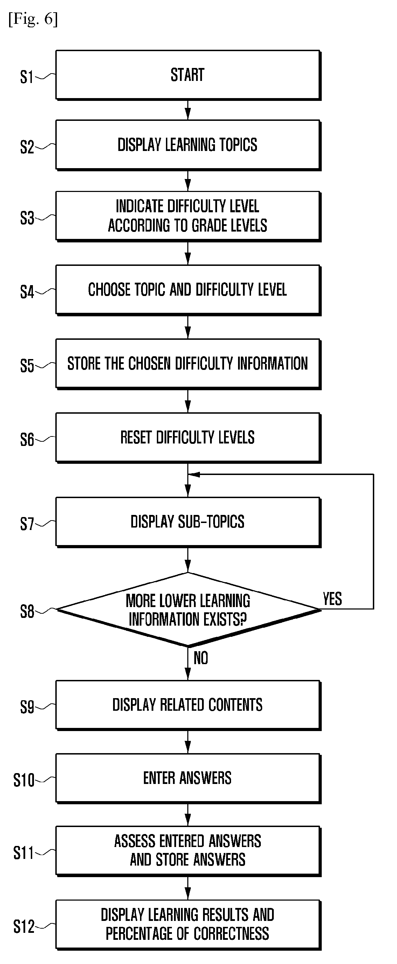

Figure 6 show the information displayed when 10 to 40 are chosen. The displayed information can be provided in contents of various forms.

Through the grammar navigation process as displayed by Figure 5a to 5b, users can attain theoretical knowledge of the explanations provided for the organically connected grammar rules- this process is also used for other topics. After attaining the above theoretical knowledge of grammar rules, by being acquainted with actual examples and other contents (texts, voice, or video), users can maximize their learning efficiencies. Such comprehensive approach to learning is different from traditional learning methods.

Video output devices with a touchscreen are preferred devices for delivering the learning methods of the present invention. Such terminal (200) consists of Input Unit (250), Display Unit (240), Control Unit (210), Communication Unit (230) and Storage (220). Learning contents are stored in the Storage (220). But, in order to provide a variety and new contents, transmitting and receiving information between a separate Server (100) is possible.

The second embodiment relates to foreign language learning method provision system and foreign language learning apparatus used for communication with the separate Server (100).

Figure 6 is a flow chart illustrating the information processing procedure of the second embodiment.

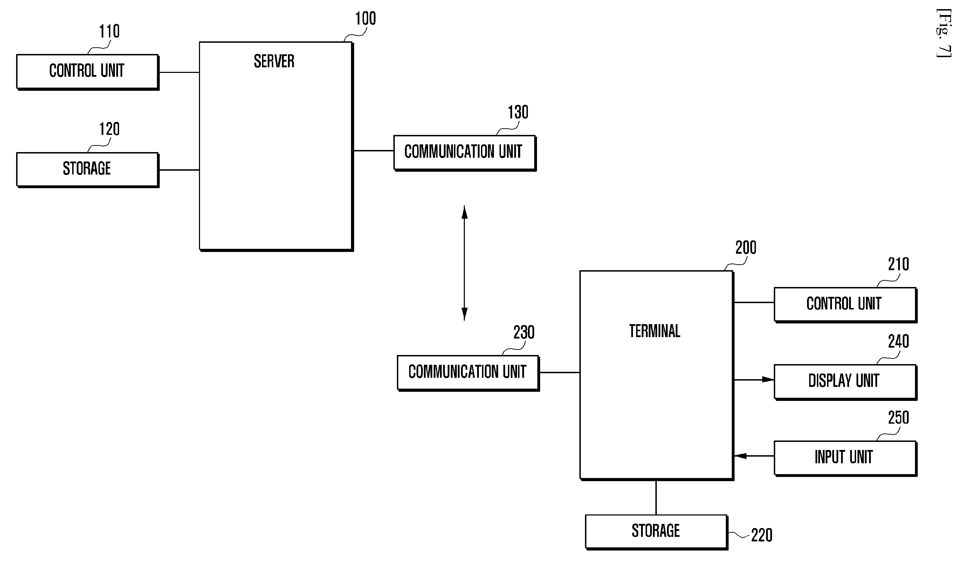

Figure 7 is a block diagram representing the system and apparatus of the second embodiment. Server (100) includes Control Unit (110), Storage (120), and Communication Unit (130). Communication Unit (130) sends and receives information wirelessly with Terminal (200). The Server (100) stores learning contents provided by the learning service provider and stores the received answer marking, difficulty level selection information from Terminal (200) in the Storage (120) of Server (100). The Control Unit (210) controls the Communication Unit (130) to send the contents selected upon request by the Terminal (200) to Terminal (200).

The Terminal (200) consists of Control Unit (210), Storage (220), Communication Unit (230), Display Unit (240) and Input Unit (250). The Storage (220) stores learning contents, as well as updates new contents from Server (100) according to the user's direction. The Communication Unit (230) of Terminal (200) and Communication Unit (130) of Server (100) can have a short distance wireless communication, Internet connection, or information transmission means by a third party service provider. The Control Unit (210) assesses whether the learning topic includes more than one sub-topic that relates to the upper topic. If there is more than one sub-topic, the Control Unit (210) allows receipt of the first input for the learning topic and display of the First lower learning information (S200) around. Once second input for displaying the second lower learning information subsequent to the first input is received the Control Unit (210) allows the above-mentioned lower menu to be displayed.

Once the process of providing learning contents begins (S1), the Display Unit displays the learning topics (S2). The provided learning topics are displayed in different colors according to grade levels, and the difficulty levels are indicated by different brightness of the above colors (S3). When the user selects the topic and difficulty level (S4), the Control Unit (210) directs the Communication Unit (230) to relay the difficulty information to Server (100), and causes the Server (100) to store the chosen difficulty information to Storage (120) (S5). Server (100) stores the above chosen difficulty information, and applies statistics for the frequency of certain difficulty levels chosen, and resets the difficulty levels for each learning topics (S6). With more learning experiences from many user, the resetting of the difficulty level would increase the accuracy of the difficulty level using the statistical approach. The newly adjusted difficulty level information is provided to each learning provision devices, allowing newly adjusted difficulty level information to be provided at the S3 level.

Information for sub-topics is displayed after choosing difficulty levels (S7), and the lower learning information may be provided in plurality according to the chosen topics. If there is more lower learning information, the process of choosing the lower learning information is repeated. If there is no further learning information, related contents are displayed without any further selection process (S9). The above learning contents may simply be a one-way presentation, or information that requires an answer for a question. In case of the problem solving content, the answers entered by the user are assessed and the subsequent results are sent to Server (100) after marking a question. These marking results are stored in Server (100)'s Storage (120) (S11), and the stored correctness are used to determine the difficulty level of the corresponding problem using a statistical processing. These statistically processed results are sent to Terminal (200), and the Terminal (200) presents the learning results including the percentage of correctness that is statistically processed (S12).

Referring to Figure 9, which shows the learning topic being displayed on a screen, sub-topics 'verbal characteristics' and 'a negative form exists' linked with a upper topic 'complete infinitives' may appear on the screen sequentially in accordance with the pre-set learning priority. For example, if 'complete infinitives' is prioritized over 'a negative form exists', once the user chooses the upper topic of 'verbal characteristics', the lower sub-topic 'complete infinitives' will appear first and after a certain amount of time, 'a negative form exists' will be displayed on the screen. Figure 9 shows an example consisting of only two sub-topics but in the actual present invention; it is not limited to two. The present invention may consist of several sub-topics. The several sub-topics can be displayed following the same manner of showing prioritized topics first and showing the rest sequentially.

Also, when the user chooses the sub-topics 'complete infinitives' and 'a negative form exists', further sub-topics of these topics will be displayed. It is also in this case, as illustrated in Figure 9, when the first sub-topic 'a negative form exists' is chosen by the user, connected second sub-topics 'negation of future tenses' and 'negation of present tenses' will appear in sequence according to the pre-set priorities. For example, as illustrated in Figure 9, if 'negation of future tenses' is prioritized over 'negation of present tenses', the former will appear first and then the later. Users can choose their priorities by their own standards while the content providers may recommend optimal priority placing to make learning more efficient.

Learning contents are provided when the user arrives at the final level of the learning topic. The learning contents can be a sentence, an example question, and audio and video lecture. These contents are not limited to one method and a combination of a variety of contents is also possible. However, aside from providing the learning contents after the selection of the final level, the contents con also be provided in an intermediary level during the learning topic selection process. The provision of the variety of contents is necessary when considering that the importance and amount of each English grammar concepts are different.

As persons with knowledge in the presented invention's technology field can make various substitutions, modifications, and changes within the technological framework of the invention, the invention is not limited to the aforementioned embodiments and attached diagrams.

### Explanation of Reference Marks

- S100: Learning subjects
- S200: First lower learning information
- S300: Second lower learning information
- 100: Servers
- 110: Control Unit
- 120: Storage
- 130: Communication Unit
- 200: Device
- 210: Control Unit
- 220: Storage
- 230: Communication Unit
- 240: Display Control
- 250: Input Unit

## Claims

1. A method of providing learning information composed of learning topics categorized by public school grade levels via a mobile terminal, the method comprising steps of:
(a) displaying a predetermined shape embodying the learning topics;
(b) when receiving a user selection for the shape, displaying learning information belonging to the selected learning topic by dividing the learning information by grade levels; and
(c) when one of the learning information divided by the grade levels is selected, providing learning content belonging to the selected learning information; wherein the step (a):
the learning topics are composed of sub-topics having a hierarchical structure in accordance with a characteristic of corresponding learning contents;
shapes embodying the sub-topics are displayed so that a shape embodying a lower topic in the hierarchical structure is displayed around a shape embodying an upper topic in the hierarchical structure,
when the shape embodying the upper topic is selected by a user, receiving a selection for the shape embodying the upper topic and displaying at least one shape embodying the lower topic,
the grade level learning information is displayed by different colors for each grade levels;
learning information displayed with the same color have different brightness depending on difficulty levels,
the shape is outlined by a plurality of boundaries,
a number of the boundaries increases according to a frequency of appearance in tests, and
the sub-topics are elements of specific explanation for each course subjects.

2. The method according to claim 1, wherein the shape embodying the lower topic displayed around the shape embodying the upper topic is connected to the shape embodying the upper topic by a line with the same color as that of itself.

3. The method according to claim 1, wherein the shape embodying the lower topic is separated from the shape embodying the upper topic by a predetermined distance in a form of an orbit.

4. The method according to claim 1, the learning content is generated by at least one of a video lecture, text information, audio information, and flash file information.

5. The method according to claim 4, further comprising:
(d) displaying at least one of a problem testing learning level of the learning content and an example related to the learning content.

6. The method according to claim 5, wherein the step (d) including:
receiving the user input related to at least one of the displayed problem and example;
determining correctness of the user input by comparing the user input with a pre-stored reference value;
counting a number of user inputs determined to be correct; and
determining whether the counted number of user inputs is greater than a predetermined number.

7. The method according to claim 6, wherein the user input includes a text input via at least one of a touch input by a touchscreen of the mobile terminal and a key input by a key input apparatus of the mobile terminal and a voice input of the user by a microphone of the mobile terminal.

8. The method according to claim 1, wherein the learning topic is displayed within a rotatable shape image.

9. The method according to claim 8, wherein the rotatable shape image is a steering wheel image of a ship.

10. A learning information providing device comprising:
a display unit receiving a touch input of a user and displaying learning information composed of a learning topic categorized by public school grade levels; and
a control unit controlling the display unit to display a predetermined shape embodying the learning topic and to display, when the user's selection on the predetermined shape is inputted, learning information belonging to the selected topic by dividing the learning information into the grade levels, and performing, when one of the learning info divided by the grade levels is selected, a computation related to providing a learning content belonging to the selected learning topic; wherein:
the learning topic is generated to be composed of a sub topic having a hierarchical structure according to a characteristic of the learning content,
the control unit configured to:
display shapes embodying the sub-topics so that a shape embodying a lower topic in the hierarchical structure is displayed around a shape embodying an upper topic in the hierarchical structure,
when the shape embodying the upper topic is selected by a user, receive a selection for the shape embodying the upper topic and display at least one shape embodying the lower topic,
display the grade level learning information with different colors for each grade levels;
display learning information with the same color have different brightness depending on difficulty levels,
display the shape to have an outline with a plurality of boundaries, and
increase a number of the boundaries according to a frequency of appearance in tests.

11. The device according to claim 10, wherein the control unit controls the display unit to display the shape embodying the lower topic around the shape embodying the upper topic to be connected to the shape embodying the upper topic by a line with the same color as that of itself.

12. The device according to claim 10, wherein the control unit controls the display unit to display the shape embodying the lower topic to be separated from the shape embodying the upper topic by a predetermined distance in a form of an orbit.

13. The device according to claim 10, the learning content is generated by at least one of a video lecture, text information, audio information, and flash file information.

14. The device according to claim 13, wherein the control unit controls the display unit to display at least one of a problem testing learning level of the learning content and an example related to the learning content.

15. The device according to claim 14, further comprising:
a microphone apparatus receiving a voice input of the user related to at least one of the display problem and example; and
a key input apparatus receiving a text input related to at least one of the displayed problem and example.

16. The device according to claim 14, wherein the display unit receives a text input of the user related to at least one of the displayed problem and example.

17. The device according to claim 15 or 16, the control unit:
determines correctness of text input or voice input of the user inputted in relation to at least one of the displayed problem and example by comparing the text input or voice input with a pre-stored reference value;
counts a number of text inputs or voice inputs from the user which are determined to be correct; and
determining whether the counted number of text inputs or voice inputs from the user is greater than a predetermined number.

18. The device according to claim 10, wherein the display unit displays the learning topic within a rotatable shape image.

19. The device according to claim 18, wherein the rotatable shape image is a steering wheel image of a ship.
